# EUROPÄISCHE PATENTANMELDUNG

(11) **EP 0 957 627 A2**
(43) Veröffentlichungstag der Anmeldung: **17.11.1999**
(21) Anmeldenummer: 99109453.3
(22) Anmeldetag: 11.05.1999
(51) Int. Cl.: H04N 1/00

(54) **Fax mit Bildtelefonie**

(30) Priorität: 15.05.1998 DE 19822003
(71) Anmelder: SIEMENS AKTIENGESELLSCHAFT, 80333 München (DE)
(72) Erfinder: Kirner, Stefan, 82377 Penzberg (DE)

(57) **Zusammenfassung**

Die Erfindung betrifft ein Verfahren zur Faxübertragung unter Verwendung eines Bildtelefons (BT) beziehungsweise einer Bildtelefonfunktion mit einer Kamera (KA), bei dem aus dem von der Kamera aufgenommenen Bild Bilddaten gewonnen werden, deren Datenformat an ein Faxdatenformat angepaßt wird, wobei die angepaßten Bilddaten an einem Faxgerät ausgebbar sind.

## Beschreibung

Die Erfindung betrifft ein Verfahren zur Faxübertragung unter Verwendung eines Bildtelefons beziehungsweise einer Bildtelefonfunktion.

Faxe werden heutzutage üblicherweise unter Verwendung von dedizierten Faxgeräten, unter Verwendung von Kombinationsgeräten aus Telefon und Fax sowie mit Hilfe eines Personal-Computers mit Faxkarte übertragen. Bei dieser heute üblichen Faxlösung können nur Dokumente übertragen werden, die in Papierform beziehungsweise elektronisch vorliegen.

Die Ansicht von Gegenständen und/oder Dokumenten jeglicher Art kann nur über den Umweg der Erstellung einer Abbildung in Papierform, z.B. einer Fotografie, gefaxt werden.

Der Erfindung liegt die Aufgabe zugrunde den Faxbetrieb für den Benutzer komfortabler zu gestalten.

Diese Aufgabe wird erfindungsgemäß durch die im Patentanspruch angegebenen Merkmale gelöst.

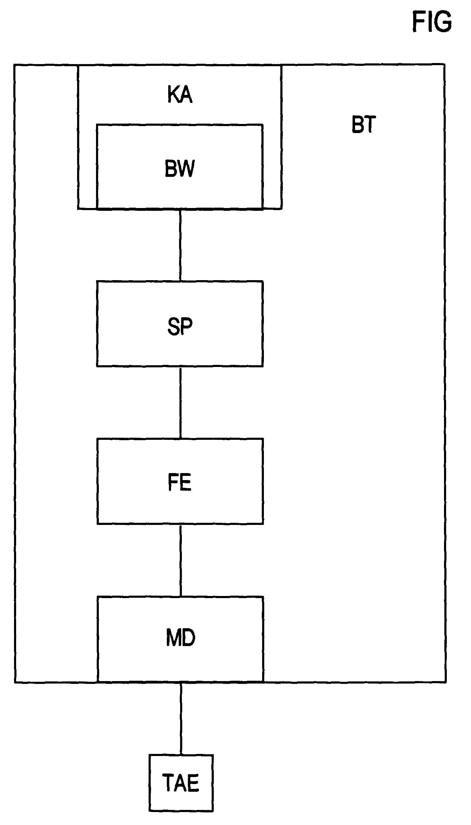

Im folgenden wird die Erfindung anhand eines in der Zeichnung dargestellten Ausführungsbeispieles erläutert.

Der Erfindung liegt die Idee zugrunde, ein Bildtelefon beziehungsweise eine Bildtelefonfunktion zur Faxübertragung zu verwenden. Unter Bildtelefon sind vorzugsweise dedizierte Bildtelefone, und unter Bildtelefonfunktion beispielsweise die Bildtelefonie unter Verwendung eines Personal-Computers oder Multimediaterminal oder Online Access oder unter Verwendung eines Fernsehgerätes mit zusätzlicher Kamera zu verstehen. Für die Bildtelefoniefunktion sind auch andere Gerätekombinationen denkbar, wobei beispielsweise die Kamera in einer sogenannten d-Box integriert ist.

Solche Geräte mit anschließbarer oder integrierter Kamera können Bilddaten aufnehmen. Hierzu ist in der einzigen Figur eine Kamera KA dargestellt, die in ein Bildtelefon BT integriert ist. In der Kamera KA integriert ist ein Bildwandler BW, der beispielsweise durch einen sogenannten CCD-Chip realisiert ist. Im Bildwandler BW werden die zu dem von der Kamera KA aufgenommenen Objekt gehörenden Bilddaten generiert.

Vom Bildwandler BW werden die Bilddaten über eine Formatanpaßeinrichtung FE an einen Speicher SP gegeben. In der Formatanpaßeinrichtung FE wird das Datenformat der Bilddaten in ein Faxdatenformat umgesetzt. Hierdurch wird die von der Kamera KA abgegebene Bildinformation in eine für Faxgeräte verständlichen Datenstrom umgesetzt.

Vom Speicher SP aus gelangen die Bilddaten, jetzt im Faxdatenformat, an ein Modem MD, und werden von diesem über eine Anschlußleitung an eine Teilnehmeranschlußeinrichtung TAE gegeben. Über die Teilnehmeranschlußeinrichtung TAE ist das Bildtelefon BT mit einem analogen oder digitalen Kommunikationsnetz verbunden. Das Kommunikationsnetz kann auch ein Mobilfunknetz sein.

Mit dem erfindungsgemäßen Verfahren kann ein Bildtelefon beziehungsweise eine Bildtelefoniefunktion zusätzlich als Faxgerät verwendet werden.

## Patentansprüche

1. Verfahren zur Faxübertragung
unter Verwendung eines Bildtelefons (BT) beziehungsweise einer Bildtelefonfunktion mit einer Kamera (KA),
bei dem aus dem von der Kamera aufgenommenen Bild Bilddaten gewonnen werden, deren Datenformat an ein Faxdatenformat angepaßt wird, wobei die angepaßten Bilddaten an einem Faxgerät ausgebbar sind.
